# FASCICULE DE BREVET EUROPEEN

(11) **EP 1 547 889 B1**
(45) Date de publication et mention de la délivrance du brevet: **07.03.2007**
(21) Numéro de dépôt: 04029433.2
(22) Date de dépôt: 13.12.2004
(51) Int. Cl.: B60T 13/567

(54) **Servomoteur pneumatique pour systeme de freinage de vehicule automobile et systeme de freinage comportant un tel servomoteur**
Pneumatischer Bremskraftverstärker für ein Bremssystem eines Fahrzeugs und Bremssystem mit einem derartigen Bremskraftverstärker
Pneumatic brake booster for a vehicle braking system and braking system comprising such a brake booster

(30) Priorité: 24.12.2003 FR 0315505
(43) Date de publication de la demande: 29.06.2005
(73) Titulaire: ROBERT BOSCH GMBH, 70442 Stuttgart (DE)
(72) Inventeur: Reboh, Jacques, 93320 Les Pavillons sous Bois (FR)
(74) Mandataire: Hurwic, Aleksander Wiktor

(56) Documents cités:
- EP-A- 1 028 045
- US-A- 5 063 830

## Description

La présente invention a pour objet un servomoteur pneumatique pour système de freinage de véhicule automobile. Elle vise un montage d'un maître cylindre sur un servomoteur. Plus particulièrement, elle vise à permettre de disposer un renfort de vis de fixation du maître cylindre au servomoteur dans une position toujours bonne.

L'invention a pour but d'optimiser le rôle du renfort en assurant une position préférée dudit renfort.

US-A-5063 830 décrit un servomoteur pneumatique d'assistance de freinage muni d'un renfort annulaire de fixation de maître-cylindre dont la rotation autour d'un axe longitudinal du servomoteur est empêchée par des vis de fixation du maître-cylindre sur le servomoteur.

Un servomoteur pneumatique d'assistance de freinage comporte généralement un boîtier avec une paroi en tôle, contenant une chambre avant à volume variable, séparée d'une chambre arrière, également à volume variable par une cloison formée par une membrane étanche et souple et une plaque jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre. Le maître cylindre pénètre donc partiellement, au moyen d'un nez de pénétration, dans la chambre avant du servomoteur.

La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve à une source de fluide propulseur. Au repos, c'est-à-dire lorsqu'un conducteur n'appuie pas sur la pédale de frein, les chambres avant et arrière sont connectées entre elles, alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison. La jupe rigide entraîne alors le piston pneumatique, qui lui-même entraîne le piston primaire du maître cylindre par l'intermédiaire d'une tige de poussée.

Lors d'un freinage, des forces d'arrachement pouvant atteindre plus de 4000 Newtons s'exercent sur le maître cylindre. Il est donc indispensable de bien solidariser le maître cylindre avec le boîtier. Pour permettre une solidarisation qui résiste aux forces qui s'exercent sur le servomoteur et le maître cylindre, on utilise une vis. La vis traverse la paroi en tôle du boîtier du servomoteur et une bride réalisée sur le maître cylindre. La bride de maître cylindre est accolée à la paroi du boîtier du servomoteur. Une tête de la vis est située dans le boîtier. La vis est maintenue en position par un écrou.

La zone de fixation, sur la paroi du boîtier, est soumise à de nombreuses contraintes, du fait des valeurs élevées des efforts, voire des variations rapides de valeurs de ces efforts. La paroi du boîtier doit pouvoir les supporter sans se rompre. Tout en étant rigide il lui faut par ailleurs avoir une certaine souplesse.

Le boîtier a une forme générale cylindrique. Il est fermé à ses extrémités respectivement par un couvercle, et par un fond. Le fond est muni d'un orifice pour laisser passer le maître cylindre. Le fond comporte une face plane reliée à une face inclinée. La face inclinée s'étend du bord de la face plane à une arête cylindrique du boîtier. Dans un premier temps de l'état de la technique, la face plane du fond du boîtier avait une forme générale circulaire. Il a ensuite été démontré qu'une face plane ayant une forme générale en losange donnait de meilleurs résultats en terme de compromis entre souplesse et rigidité de la paroi, notamment du fait d'une meilleure répartition des contraintes. Les boîtiers de servomoteur fabriqués actuellement ont donc généralement une face plane de la paroi de forme générale circulaire ou en losange.

Un renfort est prévu entre la tête de vis et la paroi en tôle du boîtier du servomoteur. Ce renfort doit permettre à la paroi du fond du boîtier de mieux résister aux contraintes. Le renfort doit donc empêcher une fatigue de la tôle de la paroi due à la répétition des freinages.

Pour un servomoteur dont la face plane a une forme générale en losange, des orifices de vis sont généralement ménagés aux extrémités du losange, c'est à dire à proximité de la face inclinée de la paroi. Les renforts doivent avoir une surface de contact importante avec la paroi du boîtier. Ils ont donc nécessairement une forme particulière :
- une face plane, qui sera en contact avec la face plane de la paroi,
- une face inclinée, qui sera, au moins partiellement, en contact avec la face inclinée de la paroi.

On utilise par exemple des renforts dont le contour, à la base du renfort, est muni de deux pans coupés formant un angle, et reliés entre eux par un arrondi. La surface circonscrite par ce contour est plane. Une autre surface délimitée par l'arrondi est inclinée. La rupture de pente du renfort, entre la face plane et la face inclinée, correspond à la rupture de pente de la paroi du boîtier. Un orifice de vis est ménagé dans le renfort, au niveau de sa face plane.

Il faut donc positionner le renfort dans une orientation précise sur le fond du boîtier. En effet, si le renfort est mal positionné, la face plane du renfort n'est pas totalement en contact avec la face plane du boîtier. De même, la face inclinée du renfort n'a pas un contact suffisant avec celle du boîtier. La zone sollicitée ne sera pas suffisamment renforcée. Au cours des freinages répétés, il s'en suivra une fragilisation progressive de la paroi. Cette fragilisation peut conduire à la rupture de la paroi. Le maître cylindre pourra alors se détacher du servomoteur. Le système de freinage ne pourra plus jouer son rôle.

Un outillage particulier ou un contrôle par l'homme, est donc nécessaire pour assurer le bon positionnement.

Une fois le renfort positionné, et la vis introduite dans l'orifice de vis, ladite vis est serrée au moyen d'un écrou. Tout mouvement du maître cylindre par rapport au servomoteur dans la zone de fixation est ainsi empêché. Il est toutefois important, à cette étape du montage, de s'assurer que le renfort ne s'est pas déplacé lors du serrage de la vis sur l'écrou. Un second contrôle est donc nécessaire.

Il en découle donc une perte de temps importante qui se répercute sur le coût de revient du servomoteur.

Cette perte de temps est d'autant plus gênante qu'il n'est jamais garanti que le renfort ne s'est pas légèrement décalé. En effet, la phase de contrôle peut être défaillante si le décalage est faible. Or le moindre déplacement du renfort, par rapport à sa position préférée, risque de l'empêcher de jouer correctement son rôle.

Dans l'invention on cherche à résoudre ces problèmes en assurant un positionnement initial correct du renfort. On se propose par ailleurs de garantir la non rotation dudit renfort lors du serrage de la vis sur l'écrou.

Pour arriver à ce résultat, on utilise au moins une forme, de préférence emboutie, disposée sur la face interne plane de la paroi du boîtier. Cette forme permet de caler le renfort de façon correcte sur la paroi du boîtier et d'empêcher tout mouvement du renfort par rapport à sa position préférée lors du serrage de la vis.

L'invention a donc pour objet un servomoteur pneumatique pour un système de freinage de véhicule automobile comprenant
- un boîtier pneumatique ayant une paroi munie d'une face interne plane, cette face interne plane étant munie d'un orifice principal pour accueillir un nez de pénétration d'un maître cylindre,
- un moyen de fixation du maître cylindre au boîtier, le moyen de fixation passant dans l'orifice secondaire,
- un renfort disposé sur la face interne plane de la paroi du boîtier, muni d'un orifice pour laisser passer le moyen de fixation,
caractérisé en ce que
la face interne plane de la paroi est munie d'un moyen de guidage pour venir en appui contre un contour du renfort.

Le moyen de guidage peut être formé par au moins un taquet. Le taquet suit, par exemple, un contour du renfort.

L'invention a également pour objet un système de freinage muni d'un tel servomoteur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : vue générale d'un servomoteur pneumatique pour système de freinage de véhicule automobile de l'état de la technique ;
- Figure 2 : vue générale d'une face interne d'une paroi de boîtier pneumatique et de renforts de l'état de la technique correctement positionnés;
- Figure 3 : vue générale d'une face interne d'une paroi de boîtier pneumatique et de renforts de l'état de la technique mal positionnés ;
- Figure 4a : vue générale d'une face interne d'une paroi de boîtier pneumatique munie d'un moyen de guidage selon un exemple de réalisation de l'invention ;
- Figure 4b : vue générale d'une face interne d'une paroi de boîtier pneumatique munie d'un moyen de guidage selon un autre exemple de réalisation de l'invention ;
- Figure 5 : agrandissement d'une face interne d'une paroi et des taquets selon l'invention ;
- Figure 6 : agrandissement d'un renfort de l'état de la technique.

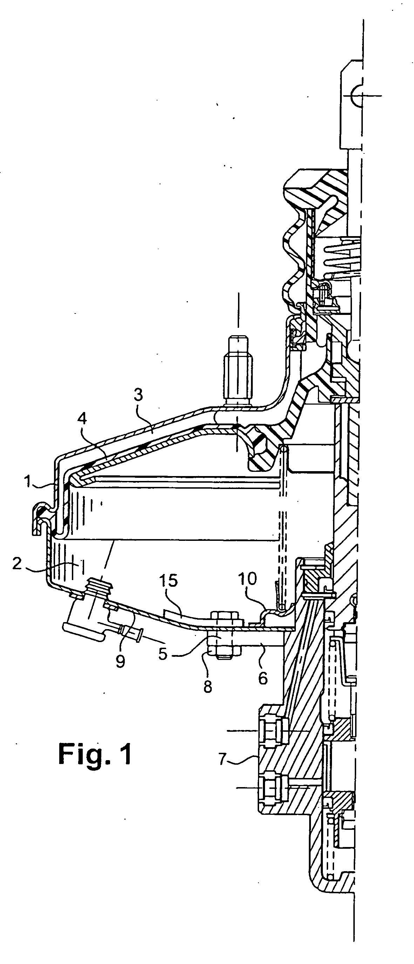

La figure 1 montre un servomoteur pneumatique pour système de freinage de véhicule automobile, comprenant un boîtier 1 dans lequel est partiellement introduit un maître cylindre 7. Le boîtier 1 comporte une chambre avant 2 et une chambre arrière 3, séparées par une membrane 4. Le boîtier 1 est de forme générale cylindrique. Ledit boîtier 1 est fermé à ses deux extrémités, respectivement par un couvercle et un fond 9. La paroi ou fond 9 est bombée. Un moyen de fixation 5 fixe le maître cylindre 7 au servomoteur. Le moyen de fixation est par exemple une vis 5. La vis 5 traverse le fond 9 du boîtier 1, ainsi qu'une bride 6 du maître cylindre 7. On pourrait également utiliser comme moyen de fixation 5 un rivet. La bride 6 est accolée contre une face externe du fond 9. La face interne du fond 9 comporte un moyen 10 de maintient d'un ressort de rappel de piston du servomoteur. Comme cela est représenté sur la figure 1, ce moyen 10 entoure un orifice accueillant le maître cylindre 7. On comprend bien sur cette figure qu'un renfort de vis 15 doit avoir une forme particulière afin qu'il ne chevauche pas le moyen 10.

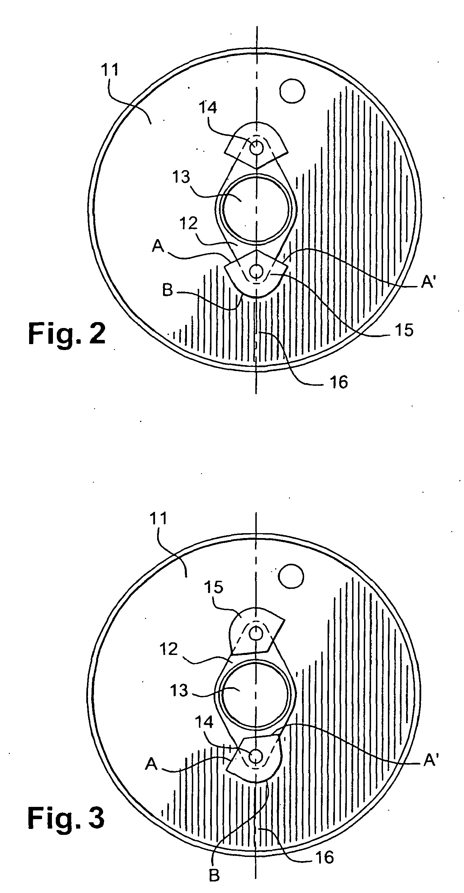

Les figures 2 et 3 montrent une face interne de la paroi 9 de boîtier 1 de servomoteur, telle qu'elle est utilisée actuellement. Ladite face interne est munie d'une face inclinée 11 et d'une face plane 12 en forme polygonale. De fait, en plus de dépendre de la position du moyen 10, la forme du renfort 15 doit aussi tenir compte de la forme de la paroi 9. La face plane 12 peut avoir une autre forme. Par exemple, elle peut avoir une forme générale circulaire.

Au centre de la face interne plane 12 est ménagé un orifice principal 13 pour laisser passer un nez de pénétration de maître cylindre 7 lorsque le servomoteur est assemblé au maître cylindre. Sont également représentés deux orifices secondaires 4 dans lesquels passeront des vis de fixation 5 (figure 1) du maître cylindre au boîtier. Dans l'exemple de réalisation particulier décrit ici, la forme polygonale 12 est approximativement un losange. Par approximativement un losange, on entend que la forme polygonale est munie de quatre côtés, un angle entre deux côté adjacents étant strictement inférieur ou strictement supérieur à 90°. Les angles formés peuvent être pointus ou arrondis. Les deux orifices de vis 14 sont situés aux sommets les plus éloignés dudit losange.

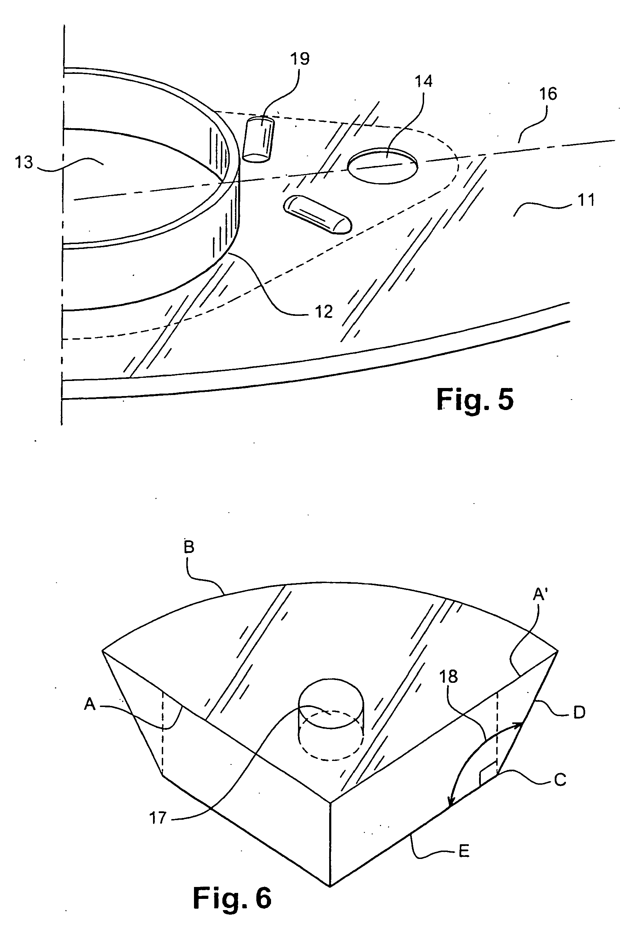

Le renfort 15 a une forme permettant un bon positionnement par rapport au moyen 10 et aux faces respectivement plane 12 et inclinée 11 de la paroi 9. Lors du montage du maître cylindre sur le servomoteur, tel qu'il est réalisé dans l'état de la technique, il est nécessaire de positionner exactement le renfort 15. Sa position sur la paroi doit être telle qu'une première partie tronconique D du renfort 15 est en contact avec la face inclinée 11. Une deuxième partie plane E, vers le sommet du cône, est quant à elle en contact avec la face plane 12 (figure 6). Le renfort 15 est muni d'un orifice 17, par lequel passe le corps de la vis 5.

Une fois que le renfort 15 est correctement positionné, on peut introduire la vis 5 dans les orifices de vis 14 et 17, afin de solidariser le boîtier 1 et le maître cylindre 7. La vis 5 est serrée par un écrou 8. Lors de cette étape de serrage de la vis 5, il existe des risques de rotation du renfort 15 par rapport à sa position initiale. Un tel décalage du renfort 15 est représenté sur la figure 3.

Sur la figure 3, en comparaison à la figure 2, le renfort 15 est décalé par rapport à un axe 16 passant par les centres respectivement de l'orifice principal 13 et des orifices secondaires 14. Dans l'exemple tel que décrit ici, et tel que cela est représenté à la figure 6, le renfort 15 a un contour en pans coupés. Un angle est formé par deux pans coupés A et A'. Un troisième côté B relie les deux pans coupés. Le côté B est arrondi. Le renfort 15 possède un profil avec une rupture de pente C entre la partie tronconique D et la partie plane E. D'une manière générale, la rupture de pente C a un angle 18 supérieur à 90°. La première partie D dudit renfort 15 porte contre une face inclinée 11 de la paroi 9. La deuxième partie E porte contre une face plane 12 de ladite paroi 9 raccordée à la face inclinée 11 à l'endroit de cette rupture de pente C (figures 2, 3 et 6).

En position correcte, l'angle formé par les pans coupés A et A' du renfort 15 est tel que l'axe 16 passe par la pointe de cet angle, comme cela est montré sur la figure 2. Les zones de contact entre le renfort 15 et la paroi 9 coïncident exactement. La figure 3 montre, par contre, le renfort 15 mal positionné. L'angle formé par les pans coupés A et A' est légèrement décalé par rapport à l'axe 16. La partie E du renfort 15 remonte alors partiellement sur la face inclinée 11 de la paroi 9. Aussi, la pente du renfort 15 étant sensiblement la même sur toute sa surface et étant égale à la pente de la face inclinée 11 de la paroi 9, on comprend bien que les contacts ne seront plus suffisants pour permettre au renfort 15 de rigidifier correctement la zone de la paroi 9 où s'exercent principalement les contraintes.

On peut également prévoir un renfort 15 dont la pente est inférieure à celle de la paroi 9.

Il va sans dire que tous les renforts d'un même servomoteur ne sont pas nécessairement décalés, certains d'entre eux pouvant être en position correct. Le raisonnement ci-dessus n'en est pas pour autant erroné. Etant donné que les contraintes qui s'exercent sur la paroi du boîtier sont concentrées en des points limités en nombre et en surface, une unique zone de fragilité suffit.

Ce mauvais positionnement du renfort 15 peut avoir plusieurs causes. Il peut résulter d'un mauvais positionnement de départ, comme d'une rotation du renfort 15 par rapport à sa position initiale lors du serrage de la vis 5.

La présente invention prévoit donc un moyen de guidage 19 pour empêcher le renfort 15 de se déplacer lors du serrage de vis 5, ou d'être mal positionné dès le départ. Le moyen de guidage 19 est en relief par rapport à le face interne plane 12.

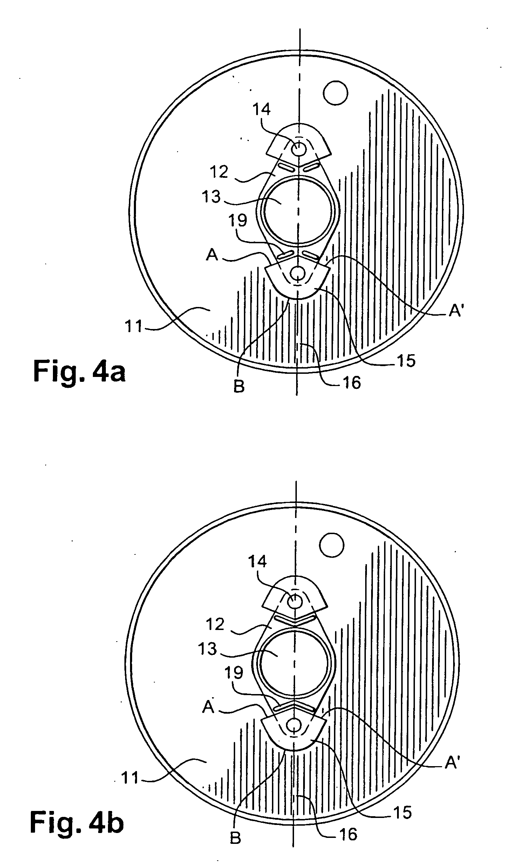

Les figures 4a et 5 représentent un exemple particulier de réalisation de l'invention. Le renfort 15 est maintenu en position correcte sur la paroi par l'intermédiaire de deux taquets 19 venant en appui contre les deux pans coupés A et A' du renfort 15. Le moyen de guidage 19 peut également, par exemple, être un bossage.

Ces taquets 19 sont par, exemple, obtenus en imprimant un impact localisé sur la face externe plane 12 de la paroi. Ils font alors partie intégrante de la paroi. On peut également obtenir de tels taquets 19, en les moulant sur la face interne plane 12 de la paroi 9, ou par collage des taquets 19 sur la face interne plane 12.

Les taquets 19, tels que représentés sur les figures 4a et 5, sont allongés, en forme de haricots. Ils sont disposés sur la face interne plane 12 de manière à former un angle dont la pointe est dirigée vers l'orifice principal 13. L'angle formé par ces taquets 19 est égal à celui formé par les deux pans coupés A et A' du renfort 15.

Les taquets 19 ont une hauteur par rapport à la face plane 12 suffisante pour maintenir le renfort 15 en place, sans pour autant fragiliser ladite face plane 12. Par exemple, pour un servomoteur de 300mm de diamètre, et une face plane 12 de 100mm, les taquets 19 ont une hauteur approximativement égale à 2mm.

Les taquets 19 étant ainsi disposés, le renfort 15 ne peut être que dans la bonne position : la pointe de l'angle formé par les pans coupés A et A' passent par l'axe 16. Il en résulte un gain de temps lors du positionnement dudit renfort 15. Par ailleurs, les taquets 19 vont empêcher toute rotation du renfort 15 lors du serrage de la vis 5. La figure 4b illustre une autre forme de taquet 19. Un unique taquet 19 est situé sur la face interne plane 12 de la paroi 9 du boîtier. Le taquet est courbé, de manière à suivre le contour en pans coupés A, A' du renfort 15.

L'exemple décrit ci-dessus se base sur une face plane de ferme approximativement en losange. Il va s'en dire que la forme polygonale de la face plane peut être différente. La forme polygonale peut par exemple être approximativement un triangle. Une vis peut alors être apposée à un, deux ou trois des sommets dudit triangle. Des taquets sont disposés aux angles du triangle munis d'un orifice de vis 14, de la même façon que pour une face plane en losange. La forme de la face plane peut ne pas être polygonale. Par exemple, elle peut avoir une forme générale circulaire. Des renforts de vis sont, par exemple, disposés de par et d'autre d'un diamètre du disque.

La face plane peut également avoir une forme générale ovale. On place alors, par exemple, les vis et renforts de vis dans la circonférence de la forme ovale, en des points les plus éloignés les uns des autres.

De même, il est possible d'envisager une autre forme au renfort. Le renfort peut par exemple comporter trois pans coupés. Il peut également avoir une forme générale en carré. Le renfort carré peut être muni de deux pans coupés formant un angle, et de deux autres côtés arrondis. Le renfort carré peut encore être muni de quatre pans coupés formant quatre angles. Un tel renfort carré élimine par ailleurs le problème d'orientation du renfort lors du positionnement. En effet, tous les pans coupés forment des angles susceptibles d'être maintenus par les taquets. Il est aussi possible de réaliser un renfort de forme circulaire, ayant un rebord relevé pour venir en appui contre la face inclinée de la paroi du servomoteur. Une bonne orientation du renfort sur la paroi sera assurée, par exemple, par un unique taquet en arc de cercle, ou par deux taquets formant un arc de cercle. Il est également possible d'avoir une renfort en forme de demi cercle. Le coté arrondi du demi cercle est par exemple dirigé vers l'orifice principal. Un moyen de guidage peut-être identique à un moyen de guidage pour un renfort circulaire.

L'invention concerne également un système de freinage comportant un tel servomoteur. Un tel système de freinage est par exemple muni d'un organe de commande actionné par un conducteur lorsqu'il souhaite freiner. La tige de commande actionne à son tour une tige de poussée repoussant une jupe rigide d'un servomoteur de l'invention.

## Revendications

1. - Servomoteur pneumatique pour un système de freinage de véhicule automobile comprenant
- un boîtier (1) pneumatique ayant une paroi (9) munie d'une face interne plane (12), cette face interne plane étant munie d'un orifice principal (13) pour accueillir un nez de pénétration d'un maître cylindre (7),
- un moyen de fixation (5) du maître cylindre au boîtier, le moyen de fixation passant dans un orifice secondaire (14),
- un renfort (15) disposé sur la face interne plane de la paroi du boîtier, muni d'un orifice (17) pour laisser passer le moyen de fixation,
la face interne plane de la paroi étant munie d'un moyen de guidage (19) pour venir en appui contre un contour (A, A') du renfort **caractérisé en ce que** le moyen de guidage empêche la rotation du renfort dans le plan de la face plane lors du montage du moyen de fixation.

2. - Servomoteur selon la revendication 1, **caractérisé en ce que** le moyen de guidage est formé par au moins un taquet (19).

3. - Servomoteur selon l'une des revendications 1 à 3, **caractérisé en ce que** le renfort a un contour en pans coupés (A, A').

4. - Servomoteur selon la revendication 3, **caractérisé en ce que** deux taquets (19) sont allongés et sont disposés de manière à former un angle dont la pointe est dirigée vers l'orifice principal, ledit angle étant égal à celui formé par deux pans coupés (A, A') du renfort.

5. - Servomoteur selon la revendication 4, **caractérisé en ce que** le renfort possède un troisième côté (B) reliant les deux pans coupés ce troisième côté étant arrondi.

6. - Servomoteur selon l'une des revendications 1 à 5, **caractérisé en ce que** le renfort possède un profil avec une rupture de pente (C) entre une première partie (D) tronconique et une deuxième partie (E) plane vers le sommet du cône, la première partie étant destinée à porter contre une face inclinée (11) de la paroi, la deuxième partie étant destinée à porter contre la face plane de la paroi raccordée à la face inclinée à l'endroit de cette rupture de pente.

7. - Servomoteur selon l'une des revendications 1 à 6, **caractérisé en ce que** le renfort a une pente sensiblement égale sur toute sa surface et au plus égale à celle de la paroi inclinée du boîtier.

8. - Servomoteur selon l'une des revendications 1 à 7, **caractérisé en ce que** la face plane (12) a une forme polygonale.

9. - Servomoteur selon la revendication 8, **caractérisé en ce que** la forme polygonale est approximativement en losange.

10. - Servomoteur selon l'une des revendications 8 et 9, **caractérisé en ce qu'**il comporte une vis à des sommets opposés du polygone.

11. - Servomoteur selon l'une des revendications 1 à 10, **caractérisé en ce que** le moyen de fixation est un moyen vis (5) écrou (8), la vis passant par l'orifice ménagé sur le renfort et un orifice secondaire (4) ménagé sur la face interne plane du boîtier.

12. - Système de freinage de véhicule automobile muni d'un servomoteur selon les revendications 1 à 11, et d'un maître cylindre (7).

## Claims

1. Pneumatic booster for a motor vehicle braking system comprising
- a pneumatic casing (1) having a wall (9) furnished with an inner flat face (12), this inner flat face being furnished with a main orifice (13) to accept a penetration tip of a master cylinder (7),
- a means (5) for attaching the master cylinder to the casing, the attachment means passing into a secondary orifice (14),
- a reinforcement (15) placed on the inner flat face of the casing wall, furnished with an orifice (17) to allow the attachment means to pass through, the inner flat face of the wall being furnished with a guidance means (19) to press against a contour (A, A') of the reinforcement, **characterized in that** the guidance means prevents the reinforcement from rotating in the plane of the flat face when the attachment means is mounted.

2. Booster according to Claim 1, **characterized in that** the guidance means is formed by at least one stop (19).

3. Booster according to one of Claims 1 to 3, **characterized in that** the reinforcement has a contour in cutaway faces (A, A').

4. Booster according to Claim 3, **characterized in that** two stops (19) are elongated and are placed so as to form an angle whose point is directed toward the main orifice, said angle being equal to that formed by two cutaway faces (A, A') of the reinforcement.

5. Booster according to Claim 4, **characterized in that** the reinforcement has a third side (B) connecting the two cutaway faces, this third side being rounded.

6. Booster according to one of Claims 1 to 5, **characterized in that** the reinforcement has a profile with a break of slope (C) between a first frustoconical portion (D) and a second flat portion (E) toward the vertex of the cone, the first portion being designed to bear against an inclined face (11) of the wall, the second portion being designed to bear against the flat face of the wall connected to the inclined face at the location of this break of slope.

7. Booster according to one of Claims 1 to 6, **characterized in that** the reinforcement has a slope that is substantially equal over all its surface and at most equal to that of the inclined wall of the casing.

8. Booster according to one of Claims 1 to 7, **characterized in that** the flat face (12) has a polygonal shape.

9. Booster according to Claim 8, **characterized in that** the polygonal shape is approximately diamond-shaped.

10. Booster according to one of Claims 8 and 9, **characterized in that** it comprises a screw at opposite points of the polygon.

11. Booster according to one of Claims 1 to 10, **characterized in that** the attachment means is a screw (5) nut (8) means, the screw passing through the orifice made in the reinforcement and a secondary orifice (4) made on the inner flat face of the casing.

12. Motor vehicle braking system furnished with a booster according to Claims 1 to 11, and a master cylinder (7).

## Patentansprüche

1. Pneumatischer Servomotor für ein Kraftfahrzeugbremssystem, der folgendes aufweist:
- ein pneumatisches Gehäuse (1) mit einer Wand (9), die mit einer ebenen Innenfläche (12) versehen ist, wobei diese ebene Innenfläche mit einer Hauptöffnung (13) zur Aufnahme einer Eindringnase eines Hauptzylinders (7) versehen ist,
- ein Mittel (5) zur Befestigung des Hauptzylinders am Gehäuse, wobei das Befestigungsmittel durch eine sekundäre Öffnung verläuft (14),
- eine Verstärkung (15), die an der ebenen Innenfläche der Wand des Gehäuses angeordnet und mit einer Öffnung (17) versehen ist, um das Durchführen des Befestigungsmittels zu ermöglichen,
wobei die ebene Innenfläche der Wand mit einem Führungsmittel (19) versehen ist, um an einen Umfang (A, A') der Verstärkung in Anlage zu gelangen, **dadurch gekennzeichnet, dass** das Führungsmittel beim Anbringen des Befestigungsmittels die Drehung der Verstärkung in der Ebene der ebenen Fläche verhindert.

2. Servomotor nach Anspruch 1, **dadurch gekennzeichnet, dass** das Führungsmittel durch mindestens eine Nase (19) gebildet ist.

3. Servomotor nach Anspruch 1 oder 2, **dadurch gekennzeichnet, dass** die Verstärkung einen Umfang mit abgeschrägten Kanten (A, A') aufweist.

4. Servomotor nach Anspruch 3, **dadurch gekennzeichnet, dass** zwei Nasen (19) langgestreckt und so angeordnet sind, dass sie einen Winkel bilden, dessen Spitze zur Hauptöffnung gerichtet ist, wobei der Winkel demjenigen entspricht, der durch zwei abgeschrägte Kanten (A, A') der Verstärkung gebildet ist.

5. Servomotor nach Anspruch 4, **dadurch gekennzeichnet, dass** die Verstärkung eine dritte Seite (B) aufweist, die die beiden abgeschrägten Kanten verbindet und abgerundet ist.

6. Servomotor nach einem der Ansprüche 1 bis 5, **dadurch gekennzeichnet, dass** die Verstärkung ein Profil mit einem Knick (C) zwischen einem ersten, kegelstumpfartigen Teil (D) und einem zweiten, ebenen Teil (E) im Bereich des Kegelscheitels aufweist, wobei der erste Teil an einer geneigten Fläche (11) der Wand anliegen soll und der zweite Teil an der ebenen Fläche der Wand anliegen soll, die an der Stelle dieses Knicks mit der geneigten Fläche verbunden ist.

7. Servomotor nach einem der Ansprüche 1 bis 6, **dadurch gekennzeichnet, dass** die Verstärkung eine Neigung aufweist, die über ihre gesamte Oberfläche im Wesentlichen gleichbleibend ist und höchstens der Neigung der geneigten Wand des Gehäuses entspricht.

8. Servomotor nach einem der Ansprüche 1 bis 7, **dadurch gekennzeichnet, dass** die ebene Fläche (12) eine polygonale Form besitzt.

9. Servomotor nach Anspruch 8, **dadurch gekennzeichnet, dass** die polygonale Form in etwa eine Raute ist.

10. Servomotor nach Anspruch 8 oder 9, **dadurch gekennzeichnet, dass** er eine Schraube mit Spitzen aufweist, die dem Polygon gegenüberliegen.

11. Servomotor nach einem der Ansprüche 1 bis 10, **dadurch gekennzeichnet, dass** das Befestigungsmittel ein Mittel mit Schraube (5) und Mutter (8) ist, wobei die Schraube die an der Verstärkung ausgebildete Öffnung und eine an der ebenen Innenfläche des Gehäuses ausgebildete, sekundäre Öffnung (14) durchquert.

12. Kraftfahrzeugbremssystem, das mit einem Servomotor nach einem der Ansprüche 1 bis 11 und mit einem Hauptzylinder (7) ausgestattet ist.
